# EUROPEAN PATENT APPLICATION

(11) **EP 4 344 808 A1**
(43) Date of publication of application: **03.04.2024**
(21) Application number: 22199130.0
(22) Date of filing: 30.09.2022
(51) Int. Cl.: B23B 27/14, B23C 5/00, B23C 5/20, B23C 5/22

(54) **SENSORIZED CUTTING TOOL**

(71) Applicant: WALTER AG, 72072 Tübingen (DE)
(72) Inventor: Steinfeldt, Steffen, 720 72 Tübingen (DE); Braun, Oliver, 720 72 Tübingen (DE); Ramsauer, Christoph, 1060 Vienna (AT); Wiedermann, Clemens, 1060 Vienna (AT); Schörghofer, Paul, 1060 Vienna (AT); Leder, Norbert, 1220 Vienna (AT)
(74) Representative: Sandvik

(57) **Abstract**

A cutting tool (1) comprising a tool body (2) comprising at least one seat (3) for receiving a cartridge (4) or a cutting insert (5), wherein the seat (3) comprises at least one support surface (6). The cutting tool body (2) comprises a sensor retaining structure (7) adjoining the support surface (7) and a piezo sensor (8) arranged in the sensor retaining structure (7). The cutting tool (1) comprises clamping means (9) for securing the cartridge (4) or cutting insert (5), and the piezo sensor (8) is an elastically deformable piezo sensor (8), which has a central longitudinal axis (24) and a direction of sensitivity perpendicular to the central longitudinal axis (24). The piezo sensor (8) comprises a measuring section (10), along which the central longitudinal axis (24) is substantially parallel to the support surface (6). The piezo sensor (8) is elastically deformed in the sensor retaining structure (7) to a pre-stressed initial state (19) and deformable to a plurality of further stressed measuring states (21).

## Description

### TECHNICAL FIELD OF THE INVENTION

The present invention relates to a cutting tool, and more specifically to a sensor-equipped cutting tool.

### BACKGROUND OF THE INVENTION AND PRIOR ART

Today, there is a common trend toward increased monitoring of metal cutting processes. A way of doing this is to put sensors on or in cutting tools. These sensors can be of various types, such as sensors to measure temperature, strain, vibrations, etc. Data from these sensors can be used to monitor the status of the cutting process as well as the tools, and if the sensors are connected to the numeric control of the machine tool, also to intervene in the cutting process to improve the quality of manufactured parts or to avoid failure. One example is the measuring of cutting forces during a metal cutting operation. Variation in the cutting forces can be due to vibrations, wear or even malfunction of the cutting tool. Such cutting force data may provide important information relating to the cutting operation. Sensorized tools are significantly more expensive than traditional tools and sensors can also be difficult to integrate into cutting tools without compromising their performance. Sensors can weaken the tool body, e.g. lower the stiffness, or reduce tool accuracy.

A type of sensor that is commonly used in various fields, albeit less in cutting tools, are so called piezo sensors. This type of sensor is based on the piezo electric effect, meaning that an electric charge accumulates in certain solid materials in response to an applied mechanical stress.

In EP1984182, a cutting tool using a piezo sensor is disclosed. The piezo sensor is used to measure the cutting forces in a cutting tool operation. A problem with this solution is that the cutting tool is expensive and complex, and also not as reliable and accurate.

These drawbacks give rise to a need for a more resilient and reliable solution that can provide a cutting tool with a higher reliability and cutting accuracy, and that is less complex and less expensive.

### SUMMARY

It is an object of the invention to address at least some of these problems and issues outlined above. An object of the embodiments of the invention is to provide a more resilient cutting tool comprising a piezo sensor. It is a further object to provide a reliable cutting tool comprising a piezo sensor. It is a still further object to provide a more economical cutting tool comprising a piezo sensor, both because it is cheaper to manufacture and easier to repair. Yet another objective is to provide a piezo-sensorized cutting tool that deviates structurally and functionally as little as possible from a standard non-sensorized tool and therefore is more accurate.

At least one of the above objectives is achieved according to the invention by a cutting tool comprising a tool body comprising at least one seat for receiving a cartridge or a cutting insert, wherein the seat comprises at least one support surface. The cutting tool body comprises a sensor retaining structure adjoining the support surface and a piezo sensor arranged in the sensor retaining structure. The cutting tool comprises clamping means for securing the cartridge or cutting insert, and the piezo sensor is an elastically deformable piezo sensor, which has a central longitudinal axis and a direction of sensitivity perpendicular to the central longitudinal axis. The piezo sensor comprises a measuring section, along which the central longitudinal axis is substantially parallel to the support surface. The piezo sensor is elastically deformed in the sensor retaining structure to a pre-stressed initial state and deformable to a plurality of further stressed measuring states.

In the prior art, when designing a cutting tool comprising a piezo sensor, it has been necessary to use sensors that are very strong not to excessively deform or even break during machining as this would mean a loss of accuracy in the cutting process. The expensive, rigid, crystalline, piezo sensors risk wearing out quicker than the tool itself, which also affects the performance of the tool and can lead to expensive failures or repairs. The required geometric tolerances of the sensor in the prior art are very high in order to ensure the correct positioning of the cutting insert. A broken sensor also means that to tool itself is no longer operable. Additionally, the piezo sensor must be designed specifically for various tool and insert size combinations. All in all, this makes the cutting tool less accurate, less reliable, and more expensive.

Thanks to the sensor retaining structure adjoining the support surface and the elastically deformable piezo sensor being pre-stressed to an initial state, the high forces on the sensor can be avoided, allowing for a cheap, generic sensor to be used instead. The mechanical stress on the tool body from the cutting forces deforms the sensor retaining structure, and thus the sensor, and are registered by the sensor. Thanks to the pre-stressed initial state of the elastically deformable piezo sensor, the sensor will detect stress caused by compression tension or shearing in the sensor retaining structure, i.e. its plurality of further stressed states, in the preferred measuring range of the sensor. The aforementioned problems with previous solutions can thus be avoided.

According to the present invention, the cutting tool is preferably for a CNC machine, i.e. a computer numerical controlled machine, or similar kinds of machine, and can be a milling tool, a turning tool, a drilling tool or another kind of cutting tool using a cartridge or cutting insert. The cutting tool is preferably for machining a workpiece, most commonly of metal, but can also be a workpiece of fibers, ceramics, polymers or composites as well as other similar materials.

In the present invention, the cutting tool comprises a cutting tool body, preferably made of a high-strength material such as steel, aluminium or titanium.

The cutting tool body comprises at least one seat for receiving a cartridge or a cutting insert. A cartridge, also called cassette, is a removable part of the tool body and comprises at least one insert seat. It is often used to facilitate the replacement of several cutting inserts at once or so that damaged insert seats can be replaced without replacing the whole cutting tool body. In some cases, they are used to adjust the position of inserts in the tool body. If the cutting insert is received directly by the tool body, without a cartridge, the seat is an insert seat.

The seat comprises at least one support surface. In line with what was previously described, the support surface is either a cartridge support surface or an insert support surface to accurately hold a cartridge or a cutting insert. The cutting tool further comprises clamping means that are for securing either the cartridge or the cutting insert by pressing it into the seat and the at least one support surface to ensure its accurate positioning. Using more than one support surface allows for improved securing of the cartridge or cutting insert by supporting it in more than one direction. The at least one support surface is advantageously arranged in the tool body so that it in the best possible way takes up the main cutting force or one or more main component of the cutting force. This means that the at least one support surface preferably faces in the opposite, or substantially opposite, direction compared to that of the cutting force or one or more main component of the cutting force. Main components of the cutting force may for example be the tangential component or radial component, and the main cutting force may be the resultant of the cutting force components.

A sensor retaining structure adjoins at least one support surface in the cutting tool body. To adjoin in this context means the sensor retaining structure is either intersected by the support surface plane or that it is in the direct proximity of the support surface within the cutting tool body. The sensor retaining structure may be a channel in the tool body. Preferably, the sensor is arranged in the sensor retaining structure less than 3mm from the support surface or more preferably less than 2mm. Even more preferably the sensor retaining structure is within 1mm from the support surface. Most preferably, it is within 0mm, i.e. that it is intersected by the insert support surface plane, i.e. the retaining structure is an open channel in the support surface, i.e. a groove. The sensor retaining structure may also continue away from the support surface, either as a closed or open channel, so that the piezo sensor may connect to a signal-processing circuitry or connection point arranged in another part of the cutting tool.

In an embodiment of the invention, the seat comprises more than one support surface. The support surfaces may each preferable face in the opposite direction than that of a main cutting force component, e.g. a tangential support surface and a radial support surface.

In an embodiment of the invention, more than one support surface in each seat may be adjoined by a sensor retaining structure.

According to an embodiment, the cutting tool may comprise several seats, each seat having at least one support surface. A sensor retaining structure may adjoin one or more support surfaces.

The cutting tool further comprises a piezo sensor arranged, or retained, or fitted, in the sensor retaining structure. The piezo sensor in the present invention is an elastically deformable piezo sensor having a central longitudinal axis and a main direction of sensitivity perpendicular, or substantially perpendicular, to the central longitudinal axis. Elastically deformable (also flexible, bendable) piezo sensors are typically used in more generic applications, such as intrusion detection, detecting rain or hail, monitor patients in hospital beds, etc. These sensors differ from those normally used in cutting tools as they are not enclosed in a rigid casing. They can therefore be arranged to follow e.g. the perimeter of an arbitrary object.

The main direction of sensitivity of the piezo sensor is the main direction in which the sensor is designed to measure force, or is optimized to measure force. Although a piezoelectric material will give rise to an electric charge regardless of the direction of the stress, the sensor may be constructed in such a way that it will not register stress in certain directions, or only register stress in an inferior way. Factors that will affect the direction of sensitivity are, e.g., the geometric properties of the piezo electric material, the properties of the casing of the sensor, the orientation of the piezo electric material in relation to the casing. Some sensors may be omnidirectional, measuring stress equally well in all directions, in which case the main direction of sensitivity is all directions. In the present invention this main direction of sensitivity is at least in the direction perpendicular, or substantially perpendicular, to the central longitudinal axis of the sensor.

The piezo sensor further comprises a measuring section, along which the central longitudinal axis of the piezo sensor is parallel, or substantially parallel, to the support surface, and along which the piezo sensor is elastically deformed in the retaining structure to a pre-stressed initial state and deformable to a plurality of further stressed measuring states. The measuring section may be the whole length of the sensor or, preferably, only a part of a longer sensor, such as a sensor cable connected to a signal-processing circuitry where the measuring section is only in the part of the sensor adjoining the support surface. The presence of the pre-stressed initial state of the piezo sensor where it adjoins the support surface, and the lack thereof where stress measurements are not wanted, makes the sensor configurable to measure only in preferred areas.

The measuring section is thus a section of the piezo sensor along which the principal measuring is to take place. Along the measuring section, the central longitudinal axis of the piezo sensor and the central longitudinal axis of the sensor retaining structure are parallel. Although the piezo sensors could detect forces in other sections of the piezo sensor, i.e. in sections of the sensor retaining structure not adjoining the support surface, and that are not pre-stressed, these could, but do not necessarily have to, be considered noise in the measuring signal. As the sections of the piezo sensor where stress measurements are not wanted are not pre-stressed, the signals from these sections are much weaker. If necessary, a skilled person can filter out this noise with signal processing methods know in the art. Along the measuring section, the central longitudinal axis is parallel, or substantially parallel, to the support surface. The direction of sensitivity is perpendicular, or substantially perpendicular, to the support surface. In other terms, the plane of sensitivity is perpendicular, or substantially perpendicular, to the support surface. The sensor is thus responsive in all radial, or substantially radial, directions within planes of sensitivity along the central longitudinal axis.

Thanks to the sensor retaining structure, the piezo sensor is protected from the full clamping force, and during use also protected against the full cutting force. The sensor retaining structure, or in embodiments with an open channel in the support surface, the retaining structure together with the cartridge or cutting insert, also protect the piezo sensor from wear from e.g. chip wear or cutting fluid wear.

The pre-stressed initial state is a state of the piezo sensor in which it has reached a level such that additional stress on the sensor retaining structure, and thus on the piezo sensor, will generate the preferred electric charge. Due to the nature of piezoelectric materials, the piezo sensor will only produce an electric charge as the stress, i.e. the cutting force, varies. The pre-stressed initial state will thus not generate a constant electric current from the piezo sensor.

During use in a cutting process, the cutting tool may experience small deformations due to the cutting forces. Being part of the cutting tool body, the sensor retaining structure will also deform. The sensor retaining structure, e.g. a channel in the tool body, seen in a cross-section perpendicular to the central longitudinal axis, may therefore change in shape or size. The sensor retaining structure preferably has a cross section so that it at least partly circumscribes the piezo sensor when the piezo sensor is arranged in the sensor retaining structure so that a stress field may be generated, and the pre-stressed initial state achieved. To partly circumscribe here means that the piezo sensor touches the sensor retaining structure in at least two points seen from a cross-section perpendicular to the central longitudinal axis of the piezo sensor when it is arranged in the sensor retaining structure. In an embodiment where the sensor retaining structure is intersected by the support surface plane, i.e. is an open channel, one of these points may be on the cartridge or cutting insert, so that when the cartridge or cutting insert is clamped in place, there are in total at least two points pressing on the piezo sensor, seen in a cross-sectional view. The changing cutting forces during a cutting process will generate changing stresses in the tool body and sensor retaining structure, leading to changing deformations, which will deform the piezo sensor into a plurality of stressed measuring states and generate a varying output signal from the piezo sensor. Preferably, this signal is processed and interpreted in a suitable circuitry, e.g. a charge amplifier and a suitable telemetry or wireless sensor node.

Preferably, the cross-section of the piezo sensor and the cross-section of the retaining structure are adapted to one another. The cross-section of the piezo sensor is preferably circular or substantially circular, but other shapes are possible, such as oval, polygonal, etc. The cross-section of the sensor retaining structure, to achieve a good adaptation to the piezo sensor, should thus be preferably rectangular, square, u-shaped, curved with one radius or curved with several radii, depending on the exact shape of the piezo sensor cross-section, in order to sufficiently circumscribe the piezo sensor. The purpose of the adaptation of the sensor retaining structure and the piezo sensor, or vice versa, is so that the preferred pre-stressed initial state can be achieved.

Thanks to the combination of an elastically deformable piezo sensor and the pre-stressed initial state, the tolerances of the sensor retaining structure can be significantly looser that they would have to be in the prior art, something that makes manufacturing easier and cheaper.

In an embodiment of the invention, the cutting tool comprises a shim. A shim is a plate-like structure that provides a support surface. The shim is placed in the seat and is thus a replaceable part of the cutting tool body. Shims protect the cutting tool body from damages that can occur during the cutting process. If a failure were to occur in the cutting process, for example fracturing of the cutting insert, the shim may be damaged but not the rest of the cutting tool body. The shim may then be replaced, and the cutting tool may be used again. In an embodiment of the invention, the sensor retaining structure is obtained in the shim.

In an embodiment, the sensor retaining structure is intersected by the support surface. In other words, the sensor retaining structure is a channel, groove, or a recess, in the cutting tool body, intersected by the support surface plane. In this embodiment, the sensor retaining structure can easily be machined in the cutting tool body with e.g. a milling tool. The shape of the groove cross-section parallel to the support surface can, as has previously been describe, vary. The tool used in the manufacturing will affect this shape. If a milling tool is used, for example, the groove cross-section may be square, rectangular or U-shaped, and machined in one simple operation. The location of the sensor retaining structure adjoining the support surface may be selected so that the continued extension of the retaining structure is made easy, or where there is more room.

In an embodiment, the sensor retaining structure is in the direct vicinity of the support surface, embedded in the cutting tool body. This could, for example, be in the form of a drilled hole in the tool body, separated from the support surface by a distance. As previously mentioned, this distance may be larger than 0 and less than or equal to 3mm, or larger than 0 and less than or equal to 2mm, or larger than 0 and less than or equal to 1mm. The stresses in the cutting tool body will change as a function of the distance to the support surface, and the output from the piezo sensor will vary according. This has to be taken into account when processing the signal. In this embodiment, the pre-stressed initial state may be achieved by press-fitting the piezo sensor in the sensor retaining structure. If the forces to be measured are very large, the stress on the sensor may exceed its stress limit, in which case the distance between the sensor retaining structure and the support surface may be increased. If necessary, also to a distance larger than 3 mm.

In an embodiment, the pre-stressed initial state is achieved by the clamping means. The clamping means may be for securing the cartridge or the cutting insert to the cutting tool body. Preferably, the clamping means is a screw connection (i.e. a threaded hole in the cutting tool body intersecting the support surface, and a screw), or a top clamp (i.e. a threaded hole in the cutting tool body not intersecting the support surface, a clamp, and a screw). In this embodiment, the sensor retaining structure is intersected by the support surface, i.e. a groove in the tool body intersected by the support surface plane. The piezo sensor is arranged in the sensor retaining structure. The dimensions of the sensor retaining structure are adapted so that when the cartridge or cutting insert is clamped into the seat and the at least one support surface, the piezo sensor will be pressed into the sensor retaining structure and be deformed into the pre-stressed initial state. Preferably, the recommended clamping force, which may be expressed as the torque required on the clamping means screw, for securing the cartridge or insert, is the same force that is required to achieve the pre-stressed initial state of the piezo sensor.

In an embodiment of the present invention, the piezo sensor comprises a measuring range. This may be a range between two levels of stress. In this range, the relationship between the stress and the accumulated electric current in the sensor can be described with a strictly monotonic function. In other words, an increasing level of stress will yield an increasing electric charge. In a more specific embodiment, this strictly monotonic function is an increasing linear function.

In an embodiment, the pre-stressed initial state is such that the sensor reaches above the lower endpoint of the measuring range. This means that any further stress on the sensor will be in the measuring range, thus simplifying the signal processing. Preferably, the pre-stressing is such that the piezo sensor is above the lower endpoint its measuring range. More preferably, the pre-stress is just above the lower endpoint of the measuring range. This saves as much as possible of the measuring range for additional stress. If the pre-stressing is too large, cutting forces can create stresses that are above the upper endpoint of the measuring range, or even worse, more than the piezo sensor can tolerate without breaking. A sufficient level of pre-stress can be confirmed by studying the sensor output when a load is applied on the cutting tool, e.g. cutting forces, as it will behave according to the function describing the relationship between the stress and the accumulated electric current in the sensor for the preferred measuring range.

In an embodiment of the invention, the piezo sensor is a piezo sensor cable. Preferably it is a coaxial cable having, starting from the center, a center core, a piezoelectric material surrounding the center core, a metal braid surrounding the piezo electric material, and finally an outer jacket. Preferably the piezoelectric material is a copolymer. Advantageously, a piezo sensor cable is a so-called endless sensor, meaning that it is not manufactured sensor by sensor in discrete pieces. Instead, the cable can be obtained in bulk, e.g. by the meter on rolls, and be cut into suitable length depending on the specific use. This greatly reduces costs. The piezo sensor cable also acts as its own signal conductor so that the signal can be transferred to other circuitry in or outside the cutting tool without separate cables as in the prior art. This reduces the number of potential failure points as there are less joints.

In an embodiment, the cutting tool comprises a temperature sensor. Preferably, the temperature sensor may be placed in the tool body so that it accurately may measure the temperature around the piezo sensor. Using a temperature sensor in this way has advantages. One reason for this is that the temperature around the sensor may be used to calculate the thermal effects on the sensor, e.g. thermal expansion of the sensor retaining structure and/or the piezo sensor itself. Using this information, these thermal effects may be filtered from the signal. Another advantage is that the temperature may be monitored so that the temperature limit of the piezo sensor is not exceeded. Preferably, the temperature sensor is a thermistor.

### BRIEF DESCRIPTION OF THE DRAWINGS

In the following, example embodiments will be described in greater detail and with reference to the accompanying drawing, in which:
Figs. 1 a-d are views of a turning tool, wherein a first embodiment of the present invention is shown;
Figs. 2 a-b are views of a turning tool, wherein a second embodiment of the present invention is shown;
Figs. 3 a-c are views of a milling tool, wherein a third embodiment of the invention is shown;
Figs. 4 a-c are views of a milling tool, wherein a fourth embodiment of the invention is shown;
Figs. 5 is a view of a piezo sensor cable used in the previously mentioned embodiments;
Figs. 6 a-d are views of a cross-section of the cutting tool, wherein the pre-stressing used in the previously mentioned embodiments is shown.

### DETAILED DESCRIPTION OF EMBODIMENTS OF THE INVENTION

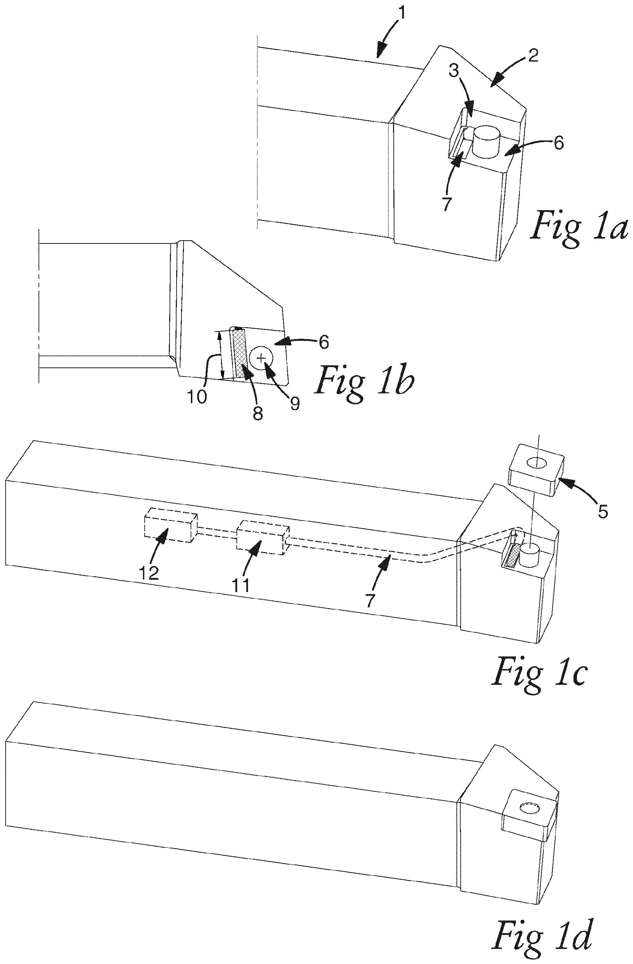

With reference to figs. 1 a-d, a first embodiment of the sensorized cutting tool is described. The first embodiment of the invention is in the form of a turning tool. The cutting tool (1) comprises a cutting tool body (2) comprising a seat (3) for receiving a cutting insert (5), wherein the seat (3) comprises three support surfaces (6). The cutting tool (1) further comprises a sensor retaining structure (7) adjoining one of the support surfaces (6) and a piezo sensor (8) is arranged in the sensor retaining structure (7). The cutting tool (1) comprises clamping means (9) for securing the cutting insert (5). The piezo sensor is an elastically deformable piezo sensor (8), which has a central longitudinal axis (24) and a main direction of sensitivity perpendicular to the central longitudinal axis (24). The piezo sensor comprises a measuring section (10), along which the central longitudinal axis (24) is substantially parallel to the support surface (6) and the piezo sensor (8) is elastically deformed in the sensor retaining structure (7) to pre-stressed initial state (19) and deformable to a plurality of further stressed measuring states (21). The pre-stressed initial state (19) is achieved by clamping the insert with the clamping means (9), pressing it into the seat (3) and against the support surface (6) with a clamping force (20), and thus pressing the piezo sensor (8) into the sensor retaining structure (7)

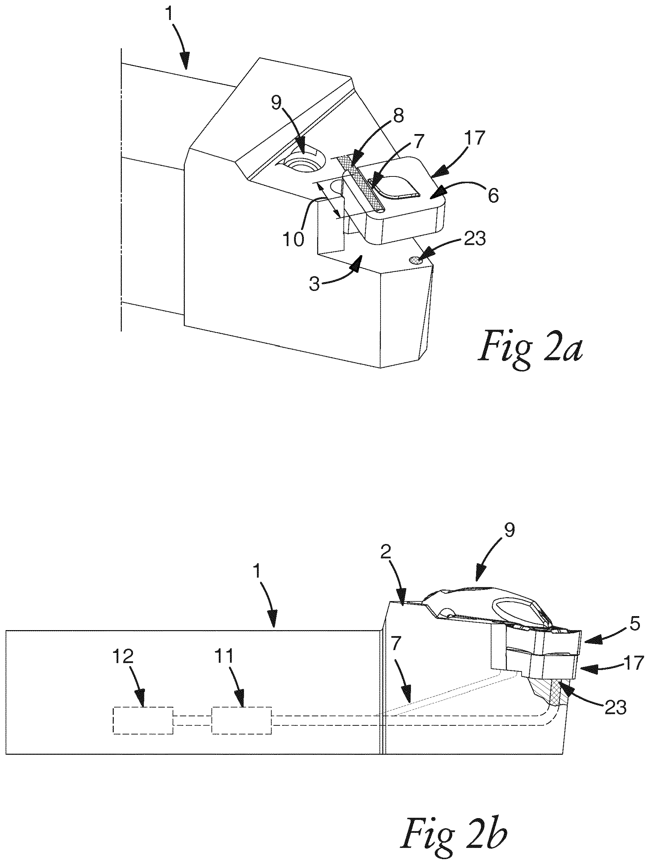

With reference to figs. 2 a-b, a second embodiment of the invention is described. This embodiment is also a turning tool but with some differences compared to the first. Here the support surface 6 and sensor retaining structure (7) are formed in a shim (17). The shim (17) acts as a replaceable support surface (6) for the cutting insert (5). The cutting tool (1) according to the second embodiment further comprises a temperature sensor (23) arranged in the tool body (2). As with the previous embodiment, the temperature sensor (23) and the piezo sensor (8) may be connected to a circuitry (11) and a power source (12). The clamping means (9) is here in the form of a top clamp and a screw connection. The pre-stressed initial state (19) is achieved by clamping the insert with the top clamp (9) thus pressing the shim (17) and the cutting insert (5) into the seat (3) with a clamping force (20). The piezo sensor is pressed into the sensor retaining structure (7) on the shim (17) by the cutting insert (5). In an alternate embodiment, otherwise similar to this one, the sensor retaining structure (7) may adjoin the support surface on the tool body (2) in the seat (3) for receiving the shim (17).

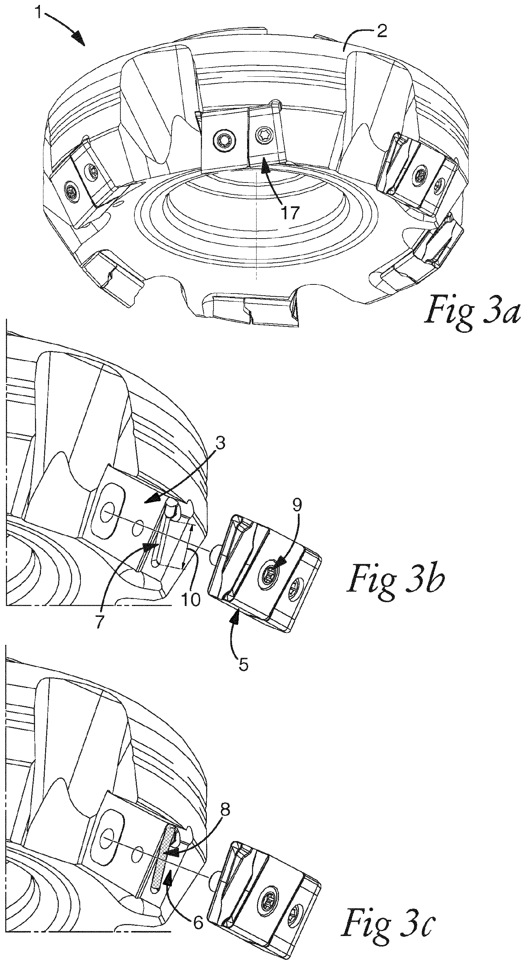

With reference to figs. 3 a-c, a third embodiment of the invention is described. The cutting tool is a milling tool comprising six seats (3), each having three support surfaces (6). Also here, a shim (17) is used, but the sensor retaining structure (7) adjoins the support surface (6) supporting the insert via the shim (17) and not the shim itself. This cutting tool (1) has significant tangential cutting forces (22) during the machine operation, which is why the piezo sensor (8) is arranged in a sensor retaining structure (7) adjoining a support surface (6) facing substantially opposite the direction of said tangential forces. In this embodiment, the main cutting force is in the tangential direction as it is a rotating cutting tool. The support surface (6) that the sensor retaining structure (7) adjoins, the substantially faces the direction of rotation, i.e. opposite the direction of the main cutting force (22). The insert (5) is however clamped with a clamping force (20) in the substantially radial direction in relation to the rotational axis of the cutting tool.

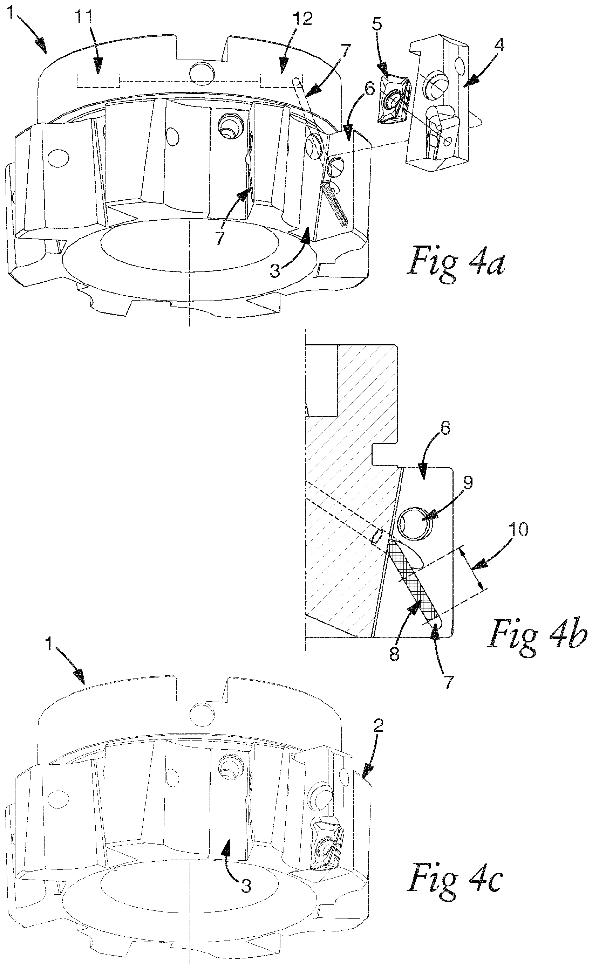

With reference to figs. 4 a-c, a fourth embodiment is described. This embodiment is a milling tool comprising eight seats (3) for receiving a cartridge (4). The cartridge (4) is a removable part of the cutting tool body (2). Each cartridge (4) comprises a seat for receiving a cutting insert (5). According to this embodiment, the sensor retaining structure (7) adjoins the support surfaces (6) in the seats (3) for receiving the cartridge (4). However, in an alternate embodiment, otherwise similar to this one, the sensor retaining structure (7) may adjoin the seats (3) for receiving the cutting inserts (5), or, in a further alternate embodiment a sensor retaining structure may adjoin support some or all surfaces in both cartridge (4) and insert (5) seats (3).

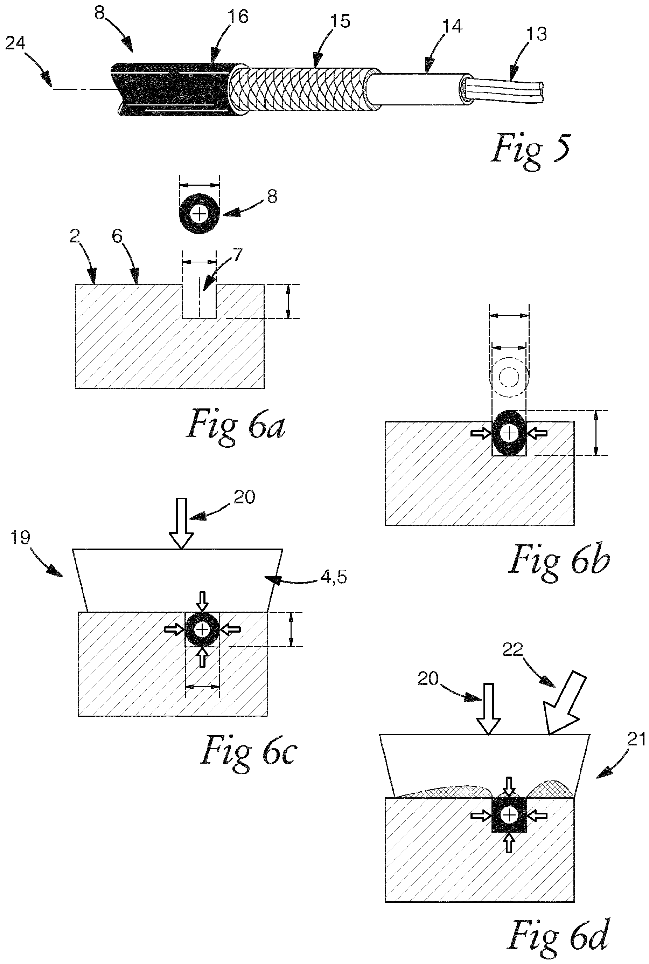

With reference to fig. 5, a piezo sensor (8) used in the previously mentioned embodiments is described. The piezo sensor (8) is elastically deformable and in the form of a cable. It comprises an outer jacket (16), a metal braid (15), a piezoelectric copolymer (14) and a center core (13). The outer jacket (16) makes this sensor less accurate in the axial direction as it would resist axial tension and compression. In the radial direction, however, the outer jacket (16) is easily deformable and the sensor (8) thus has a main direction of sensitivity in all directions perpendicular to the central longitudinal axis (24), i.e. radial directions. The cable (8) used in all the above-mentioned embodiments is 2.7 mm in diameter with a circular cross-section. The sensor in all above-mentioned embodiments is arranged in a sensor retaining structure (7) having a square, or nearly square, cross-section seen perpendicular to the central longitudinal axis (24). To achieve the preferred pre-stressed initial state (19), the sides of the square cross-section of the sensor retaining structure are 2.6 mm. As cutting forces (22) elastically deform the cutting tool body (2) during the machining operation, the sensor retaining structure (7) deforms accordingly, thus pressing on the cable (8).

According to the embodiments, the measuring range of the piezo sensor (8) has a relationship between the stress on the piezo sensor (8) and the electric charge generated in the sensor (8) defined by an increasing linear function. This means that a larger stress will always generate a larger electric charge, and that double the stress will generate double the charge. Increasing linear functions are a subset of strictly increasing monotonic functions.

The cutting tool (1) according to the embodiments comprises clamping means 9 in the form of a screw connection to clamp the cartridge (4) or the cutting insert (5), the second embodiment in combination with a top clamp. As is common in the industry, there is often a recommended torque for the clamping means (9) screw to securely clamp the cartridge (4) or cutting insert (5) recommended by the manufacturer. As an example, in the first and second embodiments of the invention, this torque is 5.0 Nm and 6.4 Nm respectively. The clamping force achieved by the torque on the clamping means screw (9) secures the insert in the seat by pressing it into the support surface, and also creates a stress field in the sensor that is above 4 MPa, which is the lower endpoint of the measuring range of this particular sensor (8). Thanks to this pre-stressing (19), all cutting forces (22) are detected by the sensor (8) in the measuring range.

The cutting tool according to the embodiments is not used in machining operations that generate a stress field in the piezo sensor that is above 37 MPa, which is the upper end of the measuring range. Although the cutting tool could be used above this range, the signal processing would have to be adapted to the potential non-linear relationship between stress and electric charge.

A cutting force applied on the cutting insert will cause an increase in stress in the tool body, and thus on the piezo sensor, and the piezo sensor will generate an electric charge. In a cutting process, the cutting force varies greatly depending on the cutting data, such as feed, depth of cut, material, etc. As an example, in a cutting process with the first embodiment of the invention, the mean cutting force was around 800 N. The variations in cutting force around the mean level, generated a variation in output voltage from the charge amplifier of about +/-125mV or about 2pC charge variation at the sensor.

In other cutting processes, the cutting forces may vary in a larger range, for example 1-1 OkN. For the largest cutting forces, the sensor signal may make it evident that the stress field in the sensor has surpassed the upper limit of the measuring range, and that the signal no longer has a linear relation to the stress. If this is the case, the sensor retaining structure may be adapted to this, e.g. by widening it in relation to the sensor, and thus reduce the stress in the sensor for a given cutting force.

A particularly beneficial application of the invention is for milling operations (shown in the third and fourth embodiments) as the cutting inserts have an interrupted, or intermittent, cut and constantly goes in and out of the workpiece. The same applies for turning processes with an interrupted surface, for example a cylinder comprising a groove in the lateral surface. The interrupted cut is harder on the cutting tool as the variations in the cutting forces are larger, and thus larger also the benefits of using a sensorized tool.

To measure the cutting forces, an integrator is preferred to convert the force proportional electric charge, generated in the piezo sensor, to a force-proportional voltage signal. This type of circuit (11) is known in the art as charge mode amplifier or charge amplifier.

The circuitry (11) may also provide amplification, low pass filtering and drift compensation. With respect to its overall transfer characteristic, this can be described as bandpass behavior. The low cutoff frequency is determined by the drift compensation and is set to about 1Hz, since typical cutting processes have dynamic cutting forces well above this frequency range. As explained earlier, static forces are out of scope for this sensor type.

The passband gain is set to optimize the expected output signal's dynamic range for the intended application. This parameter may easily be adjusted by changing the feedback capacitor in the circuit, which makes it very universal and cost efficient.

The high cutoff frequency may be configured to reject unwanted high frequency signal components, preferably determined by the utilized telemetry. Preferably, this limit may not impede the cutting force signals. In most practical applications, those range from 10th of Hz to 100th of Hz. In this case the cutoff frequency is preferably set to about 1kHz.

Each sensor may provide a force proportional signal which preferably is processed by the telemetry in order to make it accessible to the user. In this case the telemetry may provide sample rates up to 9.5kS (kilo Samples) and shares power supply (12) circuitry for the telemetry- and the charge-amplifier-circuit.

## Claims

1. A cutting tool (1) comprising:
- a cutting tool body (2) comprising at least one seat (3) for receiving a cartridge (4) or cutting insert (5), wherein the seat (3) comprises at least one support surface (6),
- clamping means 9 for securing the cartridge (4) or cutting insert (5) in the seat (3),
wherein
- the tool body (2) comprises a sensor retaining structure (7) adjoining the support surface (6),
- a piezo sensor (8) is arranged in the sensor retaining structure (7), and
- the piezo sensor (8) is an elastically deformable piezo sensor, which has a central longitudinal axis (24) and a main direction of sensitivity perpendicular to the central longitudinal axis (24),
***characterized in that***
the piezo sensor (8) comprises a measuring section (10), along which
- the central longitudinal axis (24) is substantially parallel to the support surface (6), and
- the piezo sensor (8) is elastically deformed in the sensor retaining structure (7) to a pre-stressed initial state (19), and deformable to a plurality of further stressed measuring states (21)

2. The cutting tool (1) according to claim 1, wherein the sensor retaining structure (7) is a channel in the tool body (2)

3. The cutting tool (1) according to claim 2, wherein the channel is an open channel in the support surface (6)

4. The cutting tool (1) according to claim 3, wherein when a cartridge (4) or cutting insert (5) is secured in the seat (3), the sensor is deformed to the pre-stressed state (19) by the clamping means (9) forcing the cartridge (4) or cutting insert (5) toward the support surface (6)

5. The cutting tool (1) according to any of the preceding claims, wherein the piezo sensor (8) is a piezo sensor cable

6. The cutting tool (1) according to any of the preceding claims, wherein the piezo sensor is a coaxial cable comprising a piezoelectric copolymer

7. The cutting tool (1) according to any of the preceding claims, wherein the piezo electric sensor comprises a measuring range, in which the relationship between electric charge from the sensor and mechanical stress on the sensor is describable by a strictly monotonic function

8. The cutting tool (1) according to any of the preceding claims, wherein the pre-stressed initial state (19) is equivalent to a mechanical stress on the piezo sensor (8) larger than the lower endpoint of the measuring range

9. The cutting tool (1) according to claims 8, wherein the pre-stressed initial state of the piezo sensor in combination with the further stressed measuring states (21) from cutting forces are equivalent to a stress below the upper limit of the measuring range

10. The cutting tool (1) according to any of the preceding claims, wherein the seat comprises a shim (17) and wherein the support surface (6) is located on the shim (17)

11. The cutting tool (1) according to any of the preceding claims, wherein the at least one support surface faces opposite, or substantially opposite, the direction of the main cutting force (22) or that of one of the main cutting force components

12. The cutting tool (1) according to any of the preceding claims, wherein a temperature sensor (23) is arranged in the insert seat (3)
